# EUROPEAN PATENT APPLICATION

(11) **EP 1 617 567 A2**
(43) Date of publication of application: **18.01.2006**
(21) Application number: 05015481.4
(22) Date of filing: 15.07.2005
(51) Int. Cl.: H04B 7/005

(54) **Method and system for determining a power level for communication in a wireless network**

(30) Priority: 16.07.2004 US 588809 P; 06.05.2005 US 123301
(71) Applicant: Samsung Electronics Co., Ltd., Yeongtong-gu Suwon-si, Gyeonggi-do (KR)
(72) Inventor: Rajkotia, Purva R., Plano, Collin County Texas 75024 (US); Veerasamy, Jey, Richardson Collin County, Texas 75082 (US); Kodali, Sanjay, Dallas, Collin County, Texas 75252 (US)
(74) Representative: Grünecker, Kinkeldey, Stockmair & Schwanhäusser Anwaltssozietät

(57) **Abstract**

A method for determining a power level for communication in a wireless network is provided. The method includes generating a probe message comprising a power level indicator. The power level indicator corresponds to a particular power level of transmission for the probe message. The probe message is operable to request a base station to provide system access for a mobile station. The probe message is sent to the base station at the particular power level.

## Description

### TECHNICAL FIELD OF THE INVENTION

The present invention relates generally to wireless networks and, more specifically, to a method and system for determining a power level for communication in a wireless network.

### BACKGROUND OF THE INVENTION

The use of cellular telephones and wireless networks has become increasingly widespread. Mobile stations, sucla as cellular telephones, perform system access procedures to access the wireless network for services, such as call origination, page response, registration, data burst request or response, order request or response, and the like. Basically, the mobile station enters the system access state whenever it has to send a message to a base station in the wireless network while it is not on a traffic channel.

An attempt by a mobile station to transmit the message over the air is referred to as an access probe. Each message the mobile station is sending over the access channel fits within one access probe. A collection of access probes sent at increasing power levels is referred to as an access probe sequence. The entire process of the mobile station sending a message on the access channel and receiving or failing to receive a response from the base station is referred to as an access attempt, which is made up of several access probe sequences.

The access attempt ends with either a layer 2 acknowledgement to the transmitted message being received within a certain amount of time or a time-out based on not receiving an acknowledgement to a maximum number of access probe sequences. When the acknowledgement is received from the base station, the service requested by the mobile station is generally provided.

However, in conventional wireless networks, when the mobile station subsequently wants to request another service, the entire process is started again from the beginning with neither the base station nor the mobile station making any use of information from the previous access attempt. In addition, information related to the access attompt that may be helpful for the base station to provide better service for mobile stations in its coverage area is not made available to the base station.

Therefore, there is a need in the art for improved wireless networks that more efficiently facilitate access attempts and that provide information useful to the base stations based on the access attempts. In particular, there is a need for a wireless network that is able to provide mobile stations capable of informing the base stations of a power level and also a number of access attempts in a successful access probe that may be used by the base stations to determine coverage holes, to resolve link imbalance, to implement intelligent power control, and to set up calls more quickly.

### SUMMARY OF THE INVENTION

In accordance with the present invention, a method and system for determining a power level for communication in a wireless network are provided that substantially eliminate or reduce disadvantages and problems associated with conventional methods and systems.

To address the above-discussed deficiencies of the prior art, it is a primary object of the present invention to provide a method for determining a power level for communication in a wireless network. According to an advantageous embodiment of the present invention, the method comprises generating a probe message comprising a power level indicator. The power level indicator corresponds to a particular power level of transmission for the probe message. The probe message is operable to request a base station to provide system access for a mobile station. The probe message is sent to the base station at the particular power level.

According to one embodiment of the present invention, an access parameter message comprising an initial power level and a power level increment is received from the base station.

According to another embodiment of the present invention, the power level indicator comprises a probe number for the probe message and the access parameter message further comprises a maximum probe number.

According to still another embodiment of the present invention, a response to the probe message is received from the base station and communication with the base station is provided based on the particular power level.

According to yet another embodiment of the present invention, the probe message comprises an Automatic Repeat Request message.

According to a further embodiment of the present invention, the probe message is sent to a plurality of base stations.

According to a still further embodiment of the present invention, the power level indicator comprises a probe number for the probe message.

According to yet a further embodiment of the present invention, the probe message further comprises a coverage area indicator.

According to an even further embodiment of the present invention, the coverage area indicator comprises an access sequence number that is operable to identify an access sequence associated with the probe message.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the term "each" means every one of at least a subset of the identified items; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present invention and its advantages, reference is now made to the following description taken in conjunction with the accompanying drawings, in which like reference numerals represent like parts:
FIGURE 1 illustrates an exemplary wireless network that is capable of providing power level determination for communication according to the principles of the present invention;
FIGURE 2 illustrates an exemplary base station that is capable of identifying a power level for communication with a mobile station according to the principles of the present invention;
FIGURE 3 is a flow diagram illustrating a method for determining a power level for communication in the wireless network of FIGURE 1 from the perspective of the base station of FIGURE 2 according to the principles of the present invention;
FIGURE 4 illustrates an exemplary mobile station that is capable of controlling power levels for communication with a base station according to the principles of the present invention; and
FIGURE 5 is a flow diagram illustrating a method for determining a power level for communication in the wireless network of FIGURE 1 from the perspective of the mobile station of FIGURE 4 according to the principles of the present invention.

### DETAILED DESCRIPTION OF THE INVENTION

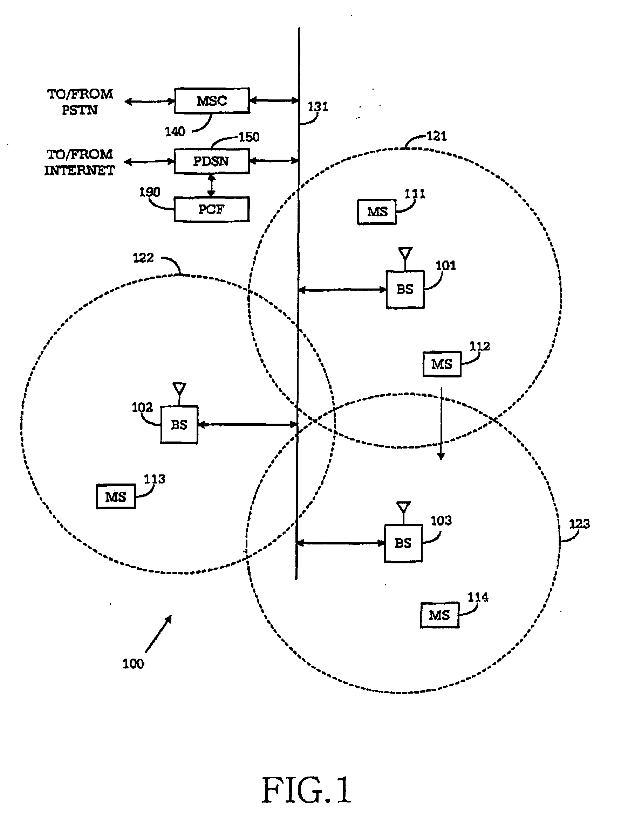

FIGURES 1 through 5, discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged wireless network.

FIGURE 1 illustrates an exemplary wireless network 100 that is capable of providing power level determination for communication according to the principles of the present invention. Wireless network 100 comprises a plurality of cell sites 121-123, each containing one of the base stations, BS 101, BS 102, or BS 103. Base stations 101-103 communicate with a plurality of mobile stations (MS) 111-114 over code division multiple access (CDMA) channels according to, for example, the IS-2000 standard (i.e., CDMA2000). In an advantageous embodiment of the present invention, mobile stations 111-114 are capable of receiving data traffic and/or voice traffic on two or more CDMA channels simultaneously. Mobile stations 111-114 may be any suitable wireless devices (e.g., conventional cell phones, PCS handsets, personal digital assistant (PDA) handsets, portable computers, telemetry devices) that are capable of communicating with base stations 101-103 via wireless links.

The present invention is not limited to mobile devices. The present invention also encompasses other types of wireless access terminals, including fixed wireless terminals. For the sake of simplicity, only mobile stations are shown and discussed hereafter. However, it should be understood that the use of the term "mobile station" in the claims and in the description below is intended to encompass both truly mobile devices (e.g., cell phones, wireless laptops) and stationary wireless terminals (e,g., a machine monitor with wireless capability).

Dotted lines show the approximate boundaries of cell sites 121-123 in which base stations 101-103 are located. The cell sites are shown approximately circular for the purposes of illustration and explanation only. It should be clearly understood that the cell sites may have other irregular shapes, depending on the cell configuration selected and natural and man-made obstructions.

As is well known in the art, each of cell sites 121-123 is comprised of a plurality of sectors, where a directional antenna coupled to the base station illuminates each sector. The embodiment of FIGURE 1 illustrates the base station in the center of the cell. Alternate embodiments may position the directional antennas in corners of the sectors. The system of the present invention is not limited to any particular cell site configuration.

In one embodiment of the present invention, each of BS 101, BS 102 and BS 103 comprises a base station controller (BSC) and one or more base transceiver subsystem(s) (BTS). Base station controllers and base transceiver subsystems arc well known to those skilled in the art. A base station controller is a device that manages wireless communications resources, including the base transceiver subsystems, for specified cells within a wireless communications network. A base transceiver subsystem comprises the RF transceivers, antennas, and other electrical equipment located in each cell site. This equipment may include air conditioning units, heating units, electrical supplies, telephone line interfaces and RF transmitters and RF receivers. For the purpose of simplicity and clarity in explaining the operation of the present invention, the base transceiver subsystems in each of cells 121, 122 and 123 and the base station controller associated with each base transceiver subsystem are collectively represented by BS 101, BS 102 and BS 103, respectively.

BS 101, BS 102 and BS 103 transfer voice and data signals between each other and the public switched telephone network (PSTN) (not shown) via communication line 131 and mobile switching center (MSC) 140. BS 101, BS 102 and BS 103 also transfer data signals, such as packet data, with the Internet (not shown) via communication line 131 and packet data server node (PDSN) 150. Packet control function (PCF) unit 190 controls the flow of data packets between base stations 101-103 and PDSN 150. PCF unit 190 may be implemented as part of PDSN 150, as part of MSC 140, or as a stand-alone device that communicates with PDSN 150, as shown in FIGURE 1. Line 131 also provides the connection path for control signals transmitted between MSC 140 and BS 101, BS 102 and BS 103 that establish connections for voice and data circuits between MSC 140 and BS 101, BS 102 and BS 103.

Communication line 131 may be any suitable connection means, including a T1 line, a T3 line, a fiber optic link, a network packet data backbone connection, or any other type of data connection. Line 131 links each vocoder in the BSC with switch elements in MSC 140. The connections on line 131 may transmit analog voice signals or digital voice signals in pulse code modulated (PCM) format, Internet Protocol (IP) format, asynchronous transfer mode (ATM) format, or the like.

MSC 140 is a switching device that provides services and coordination between the subscribers in a wireless network and external networks, such as the PSTN or Internet. MSC 140 is well known to those skilled in the art. In some embodiments of the present invention, communications line 131 may be several different data links where each data link couples one of BS 101, BS 102, or BS 103 to MSC 140.

In the exemplary wireless network 100, MS 111 is located in cell site 121 and is in communication with BS 101. MS 113 is located in cell site 122 and is in communication with BS 102. MS 114 is located in cell site 123 and is in communication with BS 103. MS 112 is also located close to the edge of cell site 123 and is moving in the direction of cell site 123, as indicated by the direction arrow proximate MS 112. At some point, as MS 112 moves into cell site 123 and out of cell site 121, a hand-off will occur.

In accordance with an advantageous embodiment of the present invention, one or more of mobile stations 111-114 arc able to provide access probe and access sequence number information to base stations 101-103. When a mobile station, such as mobile station 111, performs a system access procedure to access wireless network 100 for services, such as call origination, page response, registration, data burst request or response, order request or response, and the like, mobile station 111 transmits a probe message in an access probe to base station 101. It will be understood that mobile station 111 may also transmit a probe message to one or more other base stations, such as base stations 102-103, without departing from the scope of the present invention.

If the probe message is not acknowledged within a specified period of time, mobile station 111 increases the power level associated with the access probe and sends another probe message. If the power level reaches a maximum value, mobile station 111 begins a new access sequence by sending the probe message at the initial power level again. Mobile station 111 continues until a maximum number of access sequences is reached or until an acknowledgement is received from base station 101.

In generating the probe message for each access probe, mobile station 111 includes a power level indicator and may include a coverage area indicator within the probe message. For example, mobile station 111 may include in the probe message both a probe number to identify the current probe within the current access sequence and an access sequence number to identify the current access sequence. For one embodiment, the probe message may comprise an Automatic Repeat Request (ARQ) message.

Based on the initial power level used by mobile station 111 in transmitting the access probe and based on the value of the increment used to increase the power level in each successive access probe, base station 101 is able to determine the power level at which mobile station 111 transmitted the successful access probe from the probe number. In addition, base station 101 may use the access sequence number to determine locations of coverage holes, to resolve link imbalance, and to set up calls more quickly.

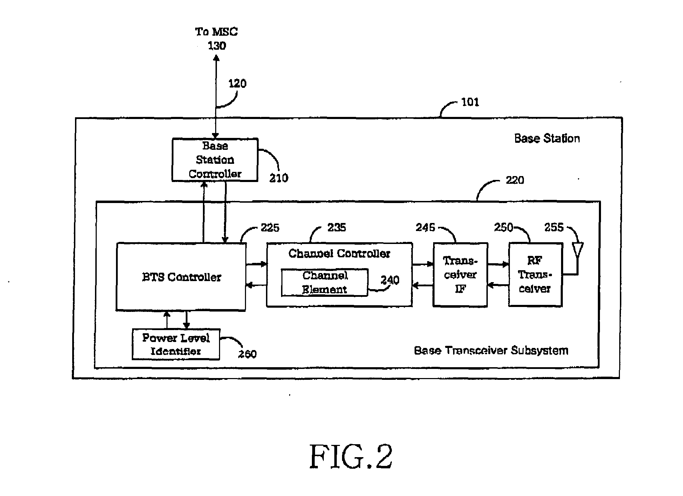

FIGURE 2 illustrates base station (BS) 101 in greater detail according to the principles of the present invention. BS 101 comprises base station controller (BSC) 210 and at least one base transceiver subsystem (BTS) 220, as previously described in connection with FIGURE 1. Base station controller 210 manages the resources in cell site 121, including base transceiver subsystem 220. According to one embodiment, base transceiver subsystem 220 comprises base transceiver subsystem (BTS) controller 225, channel controller 235 (which may comprise at least one channel element 240), transceiver interface (IF) 245, radiofrequcncy (RF) transceiver unit 250, antenna array 255, and power level identifier 260.

BTS controller 225 may comprise processing circuitry and memory capable of executing an operating program that controls the overall operation of base transceiver subsystem 220 and communicates with base station controller 210, Under norrnal conditions, BTS controller 225 directs the operation of channel controller 235, which may comprise a number of channel elements, such as channel element 240, that are each operable to perform bidirectional communication in the forward channel and the reverse channel. A "forward channel" refers to outbound signals from the base station 101 to mobile stations 111 and 112 and a "reverse channel" refers to inbound signals from mobile stations 111 and 112 to base station 101. Transceiver IF 245 transfers bidirectional channel signals between channel controller 240 and RF transceiver unit 250.

Antenna array 255 transmits forward channel signals received from RF transceiver unit 250 to mobile stations in the coverage area of base station 101. Antenna array 255 is also operable to send to RF transceiver unit 250 reverse channel signals received from mobile stations in the coverage area of the base station 101. According to one embodiment of the present invention, antenna array 255 comprises a multi-sector antenna, such as a three-sector antenna in which each antenna sector is responsible for transmitting and receiving in a coverage area corresponding to an arc of approximately 120 . Additionally, RF transceiver unit 250 may comprise an antenna selection unit to select among different antennas in antenna array 255 during both transmit and receive operations.

For the illustrated embodiment, power level identifier 260 is operable to extract a power level indicator and a coverage area indicator from a probe message received from a mobile station, such as mobile station 111. For example, power level identifier 260 may be able to extract a probe number and an access sequence number from the probe message. For one embodiment, the probe message may comprise an Automatic Repeat Request (ARQ) message.

Power level identifier 260 has access to the initial power level used by mobile station 111 in transmitting the access probe and to the value of the increment used to increase the power level in each successive access probe, which are both provided to mobile station 111 by base station 101, in an access parameter message. In addition, the access parameter message may comprise a maximum probe number and/or a maximum access sequence number. For another embodiment, however, the maximum probe number and/or the maximum access sequence number may be predetermined. For a particular embodiment, for example, both maximum numbers may be 16.

Based on the initial power level and the value of the increment used to increase the power level in successive probes and based on the probe number extracted from the probe message, power level identifier 260 is able to determine the power level at which mobile station 111 transmitted the successful access probe. In addition, power level identifier 260 may use the extracted access sequence number to determine locations of coverage holes, to resolve link imbalance, and to set up calls more quickly.

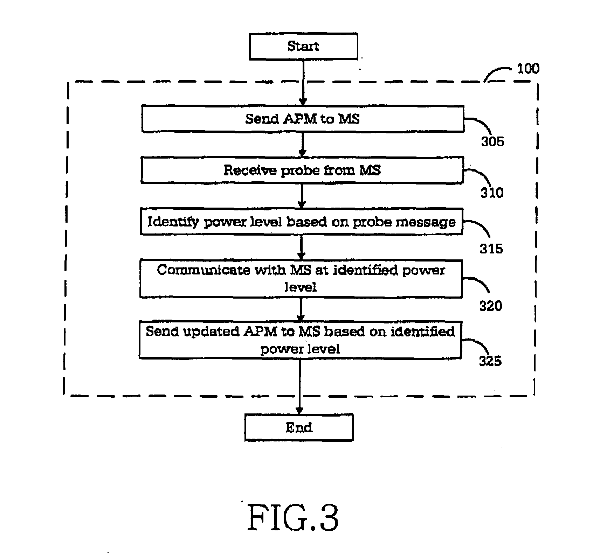

FIGURE 3 is a flow diagram illustrating a method 300 for determining a power level for communication in wireless network 100 from the perspective of base station 101 according to the principles of the present invention. For the purposes of simplicity and clarity in explaining the operation of the present invention, it shall be assumed in the following example that base station (BS) 101 of wireless network 100 provides service for mobile station (MS) 111. However, the descriptions that follow also apply to the remaining base stations and mobile stations in wireless network 100.

Initially, BS 101 sends an access parameter message (APM) to MS 111 in a paging channel (process step 305). The access parameter message comprises information for MS 111 to use in attempting to access BS 101 to request services. For example, the access parameter message may comprise an initial power level for MS 111 to use in an initial probe, as well as a power level increment by which to increase the power level with each subsequent probe in a particular access sequence. The access parameter message may also comprise a maximum probe number and/or a maximum access sequence number.

At a later time, BS 101 receives a probe comprising a probe message from MS 111 (process step 310). For one embodiment, the probe message may comprise an Automatic Repeat Request (ARQ) message. Based on information within the probe message, power level identifier 260 of BS 101 identifies the power level at which the probe was transmitted from MS 111 (process step 315). For example, power level identifier 260 may extract a probe number and an access sequence number from the probe. Using the initial power level and the power increment information previously provided by BS 101 to MS 111 in the access parameter message, power level identifier 260 is able to calculate the transmission power level for the received probe. BS 101 may also be able to determine information about the coverage area based on the access sequence number.

BS 101 then begins communication with MS 111 at the identified power level (process step 320). BS 101 may also send an updated access parameter message to MS 111 based on the identified power level (process step 325). For example, BS 101 may change the initial power level for use by MS 111 in future probes to correspond to the identified power level to increase the chances of a successful probe earlier in the access sequence. In addition, BS 101 may make adjustments to the maximum probe number and/or maximum access sequence number. For example, BS 101 may reduce the maximum probe number such that the final power level before beginning a new access sequence remains the same.

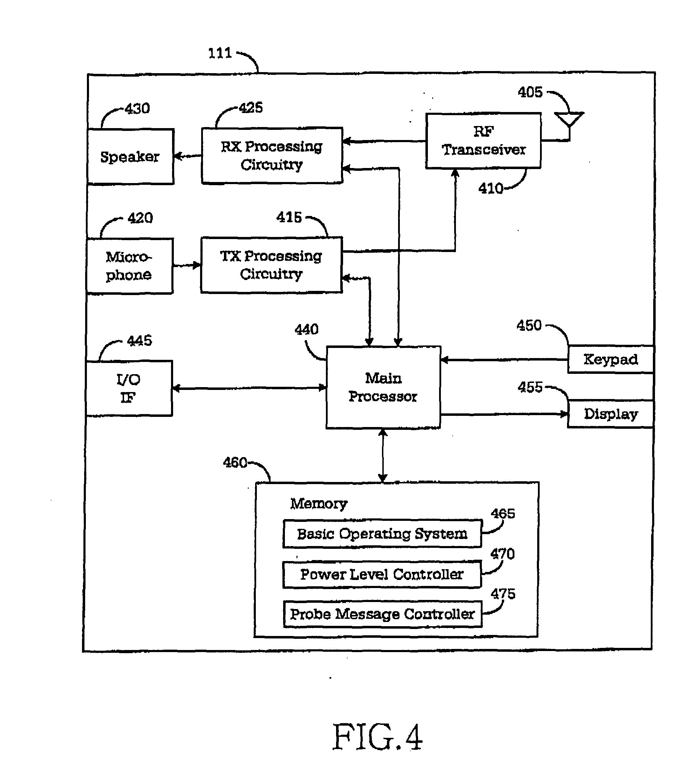

FIGURE 4 illustrates mobile station 111 in greater detail according to one embodiment of the present invention. Mobile station (MS) 111 is illustrated by way of example only. However, it will be understood that the components illustrated and described with respect to MS 111 are also part of mobile stations 112-114. MS 111 comprises antenna 405, radio frequency (RF) transceiver 410, transmit (TX) processing circuitry 415, microphone 420, receive (RX) processing circuitry 425, and speaker 430. MS 111 also comprises main processor 440, input/output (I/O) interface (IF) 445, keypad 450, display 455, lagging feature (LF) button 458, and memory 460.

RF transceiver 410 receives from antenna 405 an incoming RF signal transmitted by BS 101. RF transceiver 410 down-converts the incoming RF signal to produce an intermediate frequency (IF) or a baseband signal. The IF or baseband signal may be sent to receiver processing circuitry 425, which produces a processed baseband signal by filtering, decoding, and/or digitizing the baseband or IF signal. Receiver processing circuitry 425 is also operable to transmit the processed baseband signal to speaker 430 (e.g., when the processed baseband signal comprises voice data) or to main processor 440 for further processing (e.g., when the processed baseband signal relates to web browsing).

Transmitter processing circuitry 415 receives analog or digital voice data from microphone 420 or other outgoing baseband data (e.g., web data, c-mail, interactive video game data and the like) from main processor 440. Transmitter processing circuitry 415 encodes, multiplexes and/or digitizes the outgoing baseband data to produce a processed baseband or IF signal. RF transceiver 410 receives the outgoing processed baseband or IF signal from transmitter processing circuitry 415. RF transceiver 410 up-converts the baseband or IF signal to an RF signal that may be transmitted via antenna 405.

According to one embodiment, main processor 440 may comprise a microprocessor or microcontrollcr. Memory 460, which is coupled to main processor 440, may comprise a random access memory (RAM) and/or a read-only memory (ROM). Main processor 440 executes basic operating system program 465 stored in memory 460 in order to control the overall operation of mobile station 111. In one such operation, main processor 440 controls the reception of forward channel signals and the transmission of reverse channel signals by RF transceiver 410, receiver processing circuitry 425, and transmitter processing circuitry 415. Main processor 440 may also execute other processes and programs resident in memory 460. Main processor 440 may move data into or out of memory 460, as required by an executing process.

Memory 460 further comprises a power level controller 470 and a probe message controller 475. Although illustrated separately, it will be understood that power level controller 470 and probe message controller 475 may be implemented together in a single application without departing from the scope of the present invention.

Power level controller 470 is operable to make adjustments to the power level used by mobile station 111 to transmit messages. For example, power level controller 470 is operable to determine an initial power level for sending a probe to base station 101 based on an access parameter message previously received from base station 101. In addition, power level controller 470 is operable to determine a power level increment based on the access parameter message. Power level controller 470 is also operable to increase the power level of subsequent probes within an access sequence by the power level increment.

Probe message controller 475 is operable to provide a power level indicator and a coverage area indicator to base station 101. When mobile station 111 performs a system access procedure to access wireless network 100 for services, such as call origination, page response, registration, data burst request or response, order request or response, and the like, probe message controller 475 generates a probe message comprising a probe number as a power level indicator and an access sequence number as a coverage area indicator. For one embodiment, the probe message may comprise an Automatic Repeat Request (ARQ) message. For a particular embodiment, the ARQ message may comprise a four-bit field for the probe number and a four-bit field for the access sequence number.

Mobile station 111 transmits the probe message in an access probe to base station 101. It will be understood that mobile station 111 may also transmit the probe message to one or more other base stations, such as base stations 102-103, without departing from the scope of the present invention.

If mobile station 111 does not receive an acknowledgement of the probe message within a specified period of time, power level controller 470 is operable to increase the power level associated with the access probe. In addition, probe message controller 475 is operable to generate an updated probe message that comprises the updated probe number and access sequence number. Mobile station 111 may then send the updated probe message to base station 101.

Power level controller 470 is also operable to determine that the power level has reached a maximum value based on a maximum number of probes being sent in a particular access sequence, at which point mobile station 111 may begin a new access sequence. For one embodiment, the maximum probe number may be provided by base station 101 in the access parameter message or other suitable communication. For another embodiment, the maximum probe number may be predetermined.

To begin a new access sequence, power level controller 470 adjusts the power level back down to the initial power level and sends the corresponding probe message generated by probe message controller 475 at the initial power level. Mobile station 111 continues until a maximum number of access sequences is reached or until an acknowledgement is received from base station 101. As with the maximum number of probes, the maximum access sequence number may be provided by base station 101 in the access parameter message or other suitable communication. For another embodiment, the maximum access sequence number may be predetermined.

Main processor 440 is also coupled to the I/O interface 445. I/O interface 445 provides mobile station 111 with the ability to connect to other devices, such as laptop computers, handheld computers and the like. I/O interface 445 provides a communication path between these accessories and main controller 440. Main processor 440 is also coupled to keypad 450 and display unit 455. The operator of mobile station 111 may use keypad 450 to enter data into mobile station 111. Display 455 may comprise a liquid crystal display capable of rendering text and/or graphics from websites. It will be understood that additional embodiments may use other types of displays.

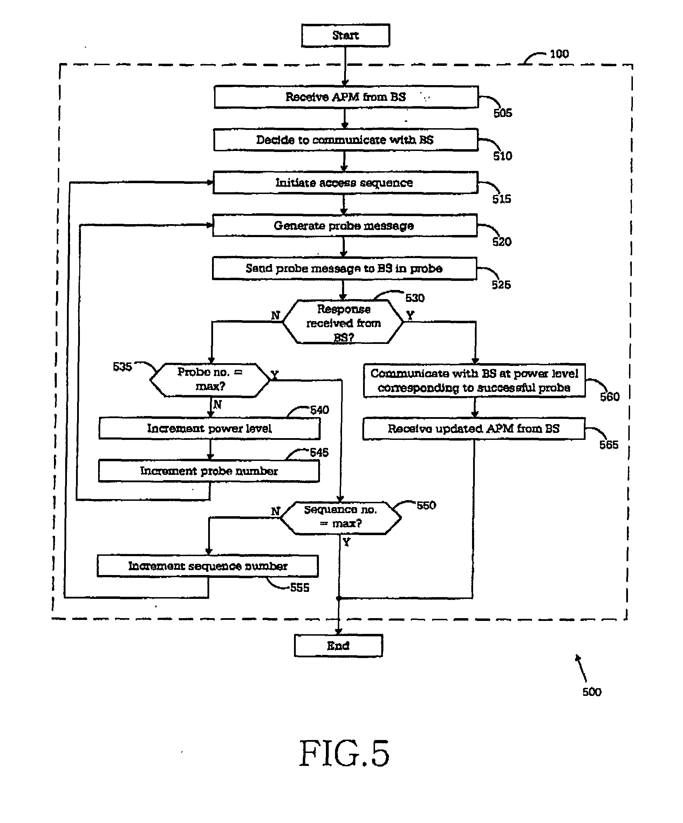

FIGURE 5 is a flow diagram illustrating a method 500 for determining a power level for communication in wireless network 100 from the perspective of mobile station 111 according to the principles of the present invention. For the purposes of simplicity and clarity in explaining the operation of the present invention, it shall be assumed in the following example that base station (BS) 101 of wireless network 100 provides service for mobile station (MS) 111. However, the descriptions that follow also apply to the remaining base stations and mobile stations in wireless network 100.

Initially, MS 111 receives an access parameter message (APM) from BS 101 in a paging channel (process step 505). The access parameter message comprises information for MS 111 to use in attempting to access BS 101 to request services. For example, the access parameter message may comprise an initial power level for MS 111 to use in an initial probe, as well as a power level increment by which to increase the power level with each subsequent probe in a particular access sequence. The access parameter message may also comprise a maximum probe number and/or a maximum access sequence number.

At a later time, MS 111 decides to communicate with BS 101 and prepares to send a probe to BS 101 based on the access parameter message (process step 510). MS 111 initiates a first access sequence (process step 515). Probe message controller 475 of MS 111 then generates a first probe message that includes the probe number and the access sequence number (process step 520). For one embodiment, the probe message may comprise an Automatic Repeat Request (ARQ) message. For a particular embodiment, the ARQ message may comprise a four-bit field for the probe number and a four-bit field for the access sequence number. MS 111 sends the probe message to BS 101 in a first probe (process step 525).

If no response to the probe is received from BS 101 within a specified period of time (process step 530), power level controller 470 of MS 111 determines whether or not the probe number has reached a maximum (process step 535). The maximum probe number may be predetermined, may be provided by BS 101 in the access parameter message, or may be otherwise suitably determined. For a particular embodiment, the maximum probe number may be 16.

If the maximum probe number has not yet been reached (process step 535), power level controller 470 increments the power level for transmission of probes by MS 111 based on the power level increment provided by BS 101 in the access parameter message (process step 540). Probe message controller 475 also increments the probe number (process step 545) before generating another probe message based on the updated probe number (process step 520).

If the maximum probe number has been reached (process step 535), power level controller 470 determines whether or not the access sequence number has reached a maximum (process step 550). The maximum access sequence number may be predctermined, may be provided by BS 101 in the access parameter message, or may be otherwise suitably determined. For a particular embodiment, the maximum access sequence number may be 16.

If the maximum access sequence number has not yet been reached (process step 550), probe message controller 475 increments the access sequence number (process step 555) before initiating another access sequence (process step 515). However, if the maximum access sequence number has been reached (process step 550), the access attempt by MS 111 has failed and the method comes to an end.

If a response to the probe is received from BS 101 within the specified period of time (process step 530), MS 111 then begins communication with BS 101 at the same power level used in transmitting the successful probe (process step 560). MS 111 may also receive an updated access parameter message from BS 101 based on the power level of the successful probe (process step 565), after which the method comes to an end. For example, BS 101 may change the initial power level for use by MS 111 in future probes to correspond to the power level of the successful probe to increase the chances of a successful probe earlier in the access sequence. In addition, BS 101 may make adjustments to the maximum probe number and/or maximum access sequence number. For example, BS 101 may reduce the maximum probe number such that the final power level before beginning a new access sequence remains the same.

Although the present invention has been described with an exemplary embodiment, various changes and modifications may be suggested to one skilled in the art. It is intended that the present invention encompass such changes and modifications as fall within the scope of the appended claims.

## Claims

1. For use in a wireless network capable of communicating with a plurality of mobile stations in a coverage area of the wireless network, a method of determining a power level for communication in the wireless network, the method comprising:
generating a probe message comprising a power level indicator corresponding to a particular power level of transmission for the probe message, the probe message operable to request a base station to provide system access for a mobile station; and
sending the probe message to the base station at the particular power level.

2. The method as set forth in Claim 1, further comprising receiving an access parameter message from the base station, the access parameter message comprising an initial power level and a power level increment.

3. The method as set forth in Claim 2, the power level indicator comprising a probe number for the probe message, the access parameter message further comprising a maximum probe number.

4. The method as set forth in Claim 1, further comprising: receiving a response to the probe message from the base station; and communicating with the base station based on the particular power level,

5. The method as set forth in Claim 1, the probe message comprising an Automatic Repeat Request message.

6. The method as set forth in Claim 1, further comprising sending the probe message to a plurality of base stations.

7. The method as set forth in Claim 1, the power level indicator comprising a probe number for the probe message.

8. The method as set forth in Claim 1, the probe message further comprising a coverage area indicator.

9. The method as set forth in Claim 8, the coverage area indicator comprising an access sequence number operable to identify an access sequence associated with the probe message.

10. For use in a wireless network capable of communicating with a plurality of mobile stations in a coverage area of the wireless network, a mobile station capable of controlling a power level for communication in the wireless network, the mobile station comprising:
a power level controller operable to adjust a power level for transmitting messages from the mobile station; and
a probe message controller operable to generate a probe message comprising a power level indicator, the power level indicator corresponding to a particular power level of transmission for the probe message, the probe message operable to request a base station to provide system access for the mobile station, the mobile station operable to send the probe message to the base station at the particular power level.

11. The mobile station as set forth in Claim 10, the mobile station further operable to receive an access parameter message from the base station, the power level controller further operable to determine an initial power level for sending the probe message to the base station based on the access parameter message.

12. The mobile station as set forth in Claim 11, the power level controller further operable to determine a power level increment based on the access parameter message.

13. The mobile station as set forth in Claim 11, the power level indicator comprising a probe number for the probe message, the access parameter message further comprising a maximum probe number.

14. The mobile station as set forth in Claim 10, the probe message comprising an Automatic Repeat Request message.

15. The mobile station as set forth in Claim 10, the power level indicator comprising a probe number for the probe message.

16. The mobile station as set forth in Claim 10, the probe message further comprising a coverage area indicator.

17. The mobile station as set forth in Claim 16, the coverage area indicator comprising an access sequence number operable to identify an access sequence associated with the probe message.

18. For use in a wireless network capable of communicating with a plurality of mobile stations in a coverage area of the wireless network, a method of determining a power level for communication in the wireless network, the method comprising:
receiving a probe message from a mobile station, the probe message comprising a power level indicator corresponding to a particular power level of transmission for the probe message, the probe message operable to request a base station to provide system access for the mobile station; and
identifying the particular power level based on the power level indicator.

19. The method as set forth in Claim 18, further comprising:
generating an access parameter message comprising an initial power level and a power level increment; and sending the access parameter message to the mobile station.

20. The method as set forth in Claim 19, the initial power level based on the particular power level.
